# EUROPÄISCHE PATENTSCHRIFT

(11) **EP 2 444 262 B1**
(45) Veröffentlichungstag und Bekanntmachung des Hinweises auf die Patenterteilung: **02.05.2018**
(21) Anmeldenummer: 11185931.0
(22) Anmeldetag: 20.10.2011
(51) Int. Cl.: B60G 7/00, B60G 99/00, B62D 33/06

(54) **Stabilisierungsvorrichtung für ein Kraftfahrzeug**
Stabilisation device for a motor vehicle
Dispositif de stabilisation pour un véhicule automobile

(30) Priorität: 20.10.2010 DE 102010042673
(43) Veröffentlichungstag der Anmeldung: 25.04.2012
(73) Patentinhaber: Deere & Company, Moline, IL 61265 (US)
(72) Erfinder: Hegler, Tobias, 76532 Baden-Baden (DE); Boge, Christof, 48291 Telgte (DE); von Holst Dr., Christian, 67310 Hettenleidelheim (DE)
(74) Vertreter: Dehnhardt, Florian Christopher

(56) Entgegenhaltungen:
- EP-A1- 0 893 290
- EP-A1- 2 426 035
- WO-A1-2005/039902
- DE-A1- 19 547 009
- DE-C- 822 776
- JP-A- 3 217 305
- US-A- 2 755 100
- US-A1- 2003 226 700
- US-A1- 2007 267 894
- US-A1- 2008 023 929
- US-B1- 6 672 598

## Beschreibung

Die Erfindung betrifft eine Stabilisierungsvorrichtung für ein Kraftfahrzeug, mit mehreren Federelementen zur Schwingungslagerung eines gegenüber einer tragenden Fahrzeugstruktur beweglich angeordneten Fahrzeugaufbaus, und mit einem Stabilisatorstab, der in Richtung einer zu stabilisierenden Wank- und/oder Nickbewegung des Fahrzeugaufbaus verlaufend mit einem ersten Endstück gelenkig an dem Fahrzeugaufbau und mit einem zweiten Endstück gelenkig an der tragenden Fahrzeugstruktur angebracht ist.

Eine derartige Stabilisierungsvorrichtung ist beispielsweise in landwirtschaftlichen Traktoren der Serie "6030 Premium" des Herstellers John Deere verbaut. Die insofern bekannte Stabilisierungsvorrichtung ist Bestandteil einer hydraulischen Kabinenfederung, bei der eine Fahrerkabine mittels Gummilagern bzw. hydraulischen Federzylindern vertikalbeweglich gegenüber einer tragenden Fahrzeugstruktur angeordnet ist. Ein als Querlenker ausgebildeter Panhardstab dient der Seitenführung und damit der Verminderung einer möglichen Wankbewegung der Fahrerkabine, wozu der Panhardstab zwischen den hydraulischen Federzylindern verlaufend mit einem ersten Ende gelenkig mit einem Achstrichter des landwirtschaftlichen Traktors und mit einem zweiten Ende gelenkig mit der Fahrerkabine verbunden ist. Die starre Ausbildung des Panhardstabs führt hierbei zu einer kreisförmigen Ein- und Ausfederbewegung der Fahrerkabine und damit zum Auftreten einer unerwünschten Seitwärtsbewegung im Bereich der Gummilager bzw. der hydraulischen Federzylinder. Die dabei hervorgerufenen Scherkräfte können zu einem frühzeitigen Verschleiß insbesondere der hydraulischen Federzylinder führen. Des Weiteren bildet der starre Panhardstab eine Schallbrücke, die eine Einleitung von am Fahrzeugchassis fahrtbedingt auftretenden Körperschallschwingungen in die Fahrerkabine begünstigt.

Es ist daher Aufgabe der vorliegenden Erfindung, eine Stabilisierungsvorrichtung der eingangs genannten Art dahingehend weiterzubilden, dass diese bezüglich ihres Verschleiß- und/oder Schallübertragungsverhaltens verbessert wird.

Diese Aufgabe wird durch eine Stabilisierungsvorrichtung mit den Merkmalen des Patentanspruchs 1 gelöst.

Die erfindungsgemäße Stabilisierungsvorrichtung für ein Kraftfahrzeug umfasst mehrere Federelemente zur Schwingungslagerung eines gegenüber einer tragenden Fahrzeugstruktur beweglich angeordneten Fahrzeugaufbaus sowie einen Stabilisatorstab, der in Richtung einer zu stabilisierenden Wank- und/oder Nickbewegung des Fahrzeugaufbaus verlaufend mit einem ersten Endstück gelenkig an dem Fahrzeugaufbau und mit einem zweiten Endstück gelenkig an der tragenden Fahrzeugstruktur angebracht ist. Der Stabilisatorstab weist zwei in Richtung seines Verlaufs zueinander auslenkbare Stabsegmente auf, wobei eine zwischen den Stabsegmenten auftretende Auslenkung mittels eines Feststellmittels blockierbar ist.

Mit anderen Worten vermag sich der Stabilisatorstab in unblockiertem Zustand bezüglich seiner Länge derart zu verändern bzw. anzupassen, dass eine Seitwärtsbewegung des Fahrzeugaufbaus beim Ein- und Ausfedern vermieden sowie eine Übertragung von an der tragenden Fahrzeugstruktur fahrtbedingt auftretenden Körperschallschwingungen wird.

Ist hingegen bei Kurven- oder Straßenfahrten bzw. beim Befahren unebenen oder abschüssigen Terrains eine erhöhte Seitenführung des Fahrzeugaufbaus erwünscht, so wird der Stabilisatorstab durch entsprechende Betätigung des Feststellmittels in seinen blockierten Zustand überführt. Der Stabilisatorstab verhält sich dann wie ein herkömmlicher starrer Querlenker bzw. Panhardstab.

Bei dem Kraftfahrzeug handelt es sich insbesondere um ein landwirtschaftliches Nutzfahrzeug, beispielsweise einen landwirtschaftlichen Traktor, eine Erntemaschine, eine selbstfahrende Feldspritze oder dergleichen.

Vorteilhafte Ausgestaltungen der Stabilisierungsvorrichtung gehen aus den Unteransprüchen hervor. Erfindungsgemäß weist das Feststellmittel einen die Stabsegmente verbindenden hydraulischen Ausgleichszylinder auf, wobei zur Blockierung der zwischen den Stabsegmenten auftretenden Auslenkung ein in dem Ausgleichszylinder hervorgerufener hydraulischer Ausgleichsvolumenstrom mittels eines Sperrelements unterbrechbar ist. Das Sperrelement kann insbesondere elektrisch betätigbar ausgebildet sein, wobei zur elektrischen Betätigung des Sperrelements eine in dem Kraftfahrzeug angeordnete Steuereinheit dient.

Ob eine Unterbrechung des Ausgleichsvolumenstroms und damit eine Blockierung des Feststellmittels durch Schließen des Sperrelements erforderlich ist, entscheidet die Steuereinheit auf Grundlage einer oder mehrerer sensorisch erfasster Eingangsgrößen, beispielsweise einer Fahrtgeschwindigkeitsgröße v_{F}, die eine aus Raddrehzahlen n abgeleitete Fahrtgeschwindigkeit des Kraftfahrzeugs wiedergibt, einer Lenkwinkelgröße δ, die einen an lenkbaren Vorderrädern des Kraftfahrzeugs eingestellten Lenkwinkel wiedergibt, und/oder einer Beschleunigungsgröße a, die eine an dem Fahrzeugaufbau angreifende Quer- und/oder Längsbeschleunigung wiedergibt. Erkennt die Steuereinheit durch Auswertung der sensorisch erfassten Eingangsgrößen v_{F}, δ und/oder a, dass eine für eine Straßenfahrt typische Fahrtgeschwindigkeit, ein auf eine Kurvenfahrt hinweisender Lenkwinkel oder eine auf eine Fahrt auf unebenem oder abschüssigem Terrain hinweisende Quer- und/oder Längsbeschleunigung vorliegt, mithin also zur Vermeidung möglicher Wank- und/oder Nickbewegungen eine erhöhte Seitenführung des Fahrzeugaufbaus erwünscht ist, wird der Ausgleichsvolumenstrom zur Blockierung des Feststellmittels durch Schließen des Sperrelements unterbrochen. Denkbar ist es in diesem Zusammenhang auch, eine Vorhersage möglicher Wank- bzw. Nickbewegungen des Fahrzeugaufbaus aus dem Betrag einer zeitlichen Änderung des Lenkwinkels bzw. aus der Betätigungscharakteristik eines in dem Kraftfahrzeug vorhandenen Brems- und/oder Gaspedals zu treffen.

Zusätzlich kann als weitere Eingangsgröße eine Federweggröße Δs, die eine an den Federelementen auftretende Auslenkung wiedergibt, Berücksichtigung finden. So kann bei Erkennung von zu ausgeprägten Seitwärtsbewegungen des Fahrzeugaufbaus führenden Auslenkungen zumindest zeitweise eine Unterbrechung des Ausgleichsvolumenstroms und damit eine Blockierung des Feststellmittels durch Öffnen des Sperrelements aufgehoben werden. Auf diese Weise lässt sich eine mögliche Überlastung der Federelemente aufgrund übermäßiger Scherkräfte zuverlässig verhindern.

Vorzugsweise ist der Ausgleichszylinder als Gleichlaufzylinder ausgebildet, wobei das Sperrelement eine erste und zweite Zylinderkammer des Gleichlaufzylinders hydraulisch miteinander verbindet. Der Gleichlaufzylinder weist einen die beiden Zylinderkammern trennenden Kolben sowie zwei auf gegenüberliegenden Seiten des Kolbens angeordnete Kolbenstangen identischen Querschnitts auf, sodass eine Verschiebung des Kolbens zu betragsmäßig übereinstimmenden Volumenänderungen in den beiden jeweils als Ringraum ausgebildeten Zylinderkammern führt. Im Sinne einer möglichst kompakten und zugleich robusten Bauweise kann das Sperrelement baulicher Bestandteil des Kolbens des Gleichlaufzylinders sein. Es ist jedoch auch denkbar, das Sperrelement außerhalb des Gleichlaufzylinders anzuordnen, wozu dieses über zugehörige Hydraulikleitungen mit den Zylinderkammern des Gleichlaufzylinders verbunden wird. Soll das Feststellmittel blockiert werden, so wird der bei einer Verschiebung des Kolbens in dem Ausgleichszylinder hervorgerufene Ausgleichsvolumenstrom durch Schließen des Sperrelements unterbrochen.

Alternativ besteht die Möglichkeit, dass der Ausgleichszylinder als Differentialzylinder ausgebildet ist, wobei das Sperrelement eine erste und zweite Zylinderkammer des Differentialzylinders hydraulisch miteinander verbindet und ein weiteres Sperrelement zur Herstellung einer Volumenausgleichsverbindung zwischen einer der beiden Zylinderkammern und einem Hydrospeicher vorgesehen ist. Der Differentialzylinder weist lediglich an einer Seite des Kolbens eine Kolbenstange auf. Eine Verschiebung des Kolbens führt daher zu betragsmäßig unterschiedlichen Volumenänderungen in den beiden als Kolben- bzw. Ringraum ausgebildeten Zylinderkammern. Der insofern auftretende Unterschied wird über die Volumenausgleichsverbindung sowie den daran angeschlossenen Hydrospeicher kompensiert. Der Hydrospeicher kann von herkömmlicher Bauart sein und einen Druckbehälter umfassen, der durch ein drucknachgiebiges Trennglied in einen ersten und zweiten Arbeitsraum unterteilt ist. Der erste Arbeitsraum steht über das weitere Sperrelement mit der ersten oder zweiten Zylinderkammer in Verbindung, wohingegen ein in dem zweiten Arbeitsraum befindliches und unter Druck stehendes Gas eine auf das Trennglied einwirkende Gasfeder bildet. Bei dem Gas handelt es sich in der Regel um Stickstoff oder eine gasförmige Stickstoffverbindung. Alternativ kann der Hydrospeicher auch als federbelasteter Speicher ausgebildet sein, bei dem anstelle eines Gases ein mechanisch vorgespanntes Federelement auf das Trennglied einwirkt. Durch entsprechende Wahl der Federkonstanten des Hydrospeichers ist eine gezielte Vorgabe des Ein- und Ausfederverhaltens des Ausgleichszylinders möglich. Soll das Feststellmittel blockiert werden, so wird der bei einer Verschiebung des Kolbens in dem Ausgleichszylinder hervorgerufene Ausgleichsvolumenstrom durch gleichzeitiges Schließen der beiden Sperrelemente unterbrochen. Die beiden Sperrelemente können hierbei baugleich ausgebildet sein.

Bei dem Sperrelement handelt es sich insbesondere um ein bezüglich seines Strömungswiderstands verstellbares Drosselventil. Es ist möglich, dass das Drosselventil entweder zweistufig zwischen einer geöffneten und einer geschlossenen Ventilstellung umschaltbar ist oder aber eine mehrstufige bzw. stufenlose Anpassung des Strömungswiderstands erlaubt. In letzteren Fall ist eine gezielte Beeinflussung des durch das Drosselventil hindurchtretenden Ausgleichsvolumenstroms und damit eine partielle Blockierung des Feststellmittels möglich. Der Ausgleichszylinder arbeitet dann als Schwingungsabsorber mit einstellbarer Dämpfungscharakteristik. Grundsätzlich ist es auch denkbar, das Sperrelement als Proportionalventil oder dergleichen auszubilden, oder aber eine Blockierung des Feststellmittels statt auf hydraulischem auf rein mechanischem Wege vorzunehmen.

Des Weiteren besteht die Möglichkeit, dass der hydraulische Ausgleichsvolumenstrom ein Hydraulikfluid veränderlicher Rheologie aufweist, wobei das Drosselventil zur Verstellung des Strömungswiderstands eine Einrichtung zur Rheologieänderung umfasst. Da die Verstellung des Strömungswiderstands durch Änderung der Rheologie und damit des Fließverhaltens des Hydraulikfluids erfolgt, und nicht etwa konventionell auf mechanischem Wege, arbeitet das Drosselventil weitgehend verschleißfrei.

Bei dem Hydraulikfluid veränderlicher Rheologie kann es sich insbesondere um eine magnetorheologische Flüssigkeit handeln. Diese zeichnet sich - im Vergleich zu der technisch verwandten Gruppe der elektrorheologischen Flüssigkeiten - durch verbesserte Kraftaufnahmefähigkeiten aus. Die Zusammensetzung sowie das Verhalten derartiger Flüssigkeiten sind aus der Fachliteratur bekannt.

Demgemäß weisen magnetorheologische Flüssigkeiten magnetisch polarisierte Partikel auf, die in einer Trägerflüssigkeit, typischerweise Mineralöl oder synthetisches Öl, kolloidal suspendiert sind. Die Partikel bestehen üblicherweise aus Carbonyleisen mit einem Durchmesser von 1 bis 10 µm. Die Partikel werden in der Regel mittels einer polymeren Oberflächenbeschichtung zur Vermeidung einer unerwünschten Sedimentationsneigung stabilisiert. Wird die magnetorheologische Flüssigkeit einem Magnetfeld ausgesetzt, so verketten sich die Partikel innerhalb der Trägerflüssigkeit entlang der Feldlinien und führen zu einer von der Feldstärke abhängigen Erhöhung der Schubfließgrenze. Auf diese Weise lässt sich das Fließverhalten der magnetorheologischen Flüssigkeit innerhalb weniger Millisekunden reversibel verändern.

Die Rheologieänderung des Hydraulikfluids erfolgt insbesondere im Bereich eines den Strömungswiderstand des Drosselventils bestimmenden Durchtrittskanals. Hierzu ist mittels der Einrichtung zur Rheologieänderung ein Magnetfeld im Bereich des Durchtrittskanals des Drosselventils erzeugbar. Durch entsprechende Auswahl der Geometrie des Durchtrittskanals sowie der rheologischen Eigenschaften des verwendeten Hydraulikfluids ist eine gezielte Beeinflussung des Strömungswiderstands im gesamten Verstellbereich des Drosselventils möglich. Der Durchtrittskanal kann beispielsweise die Gestalt einer in dem Drosselventil ausgebildeten Verjüngung oder Einschnürung aufweisen.

Um eine zuverlässige Unterbrechung des Ausgleichsvolumenstroms auch bei auf den Stabilisatorstab betriebsbedingt wirkenden Kräften sicherzustellen, muss der Strömungswiderstand des Drosselventils in dessen geschlossener Ventilstellung ausreichend hoch sein. Ein besonders hoher Strömungswiderstand ist dann erzielbar, wenn mittels der Einrichtung zur Rheologieänderung ein Magnetfeld erzeugbar ist, das im Wesentlichen senkrecht zum Verlauf des Durchtrittskanals und damit zur Verkettungsrichtung der Partikel in der magnetorheologischen Flüssigkeit orientiert ist.

Bei der Einrichtung zur Rheologieänderung kann es sich insbesondere um eine als baulicher Bestandteil des Drosselventils ausgebildete Magnetspulenanordnung handeln. Die Magnetspulenanordnung umfasst beispielsweise eine um einen ferromagnetischen Kern gewickelte Magnetspule. Die Magnetspule und/oder deren ferromagnetischer Kern münden vorzugsweise in unmittelbarer Nähe des Durchtrittskanals in das Drosselventil.

Typischerweise handelt es sich bei der tragenden Fahrzeugstruktur um ein Fahrzeugchassis und bei dem Fahrzeugaufbau um eine Fahrerkabine. Es ist jedoch auch denkbar, dass die Federelemente zwischen einer Starrachse als tragender Fahrzeugstruktur und dem Fahrzeugchassis angeordnet sind. Die Federelemente selbst sind insbesondere als Gummilager, mechanische Federbeine und/oder hydraulische Federzylinder ausgebildet, wobei letztere Bestandteil einer in dem Kraftfahrzeug vorhandenen hydraulischen Einrichtung zur Lage- bzw. Niveauregulierung des Fahrzeugaufbaus sein können.

Die erfindungsgemäße Stabilisierungsvorrichtung für ein Kraftfahrzeug wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein schematisch dargestelltes Ausführungsbeispiel der erfindungsgemäßen Stabilisierungsvorrichtung für ein Kraftfahrzeug,
- Fig. 2: eine beispielhaft dargestellte erste Ausführungsform eines von der erfindungsgemäßen Stabilisierungsvorrichtung umfassten Feststellmittels, und
- Fig. 3: eine beispielhaft dargestellte zweite Ausführungsform eines von der erfindungsgemäßen Stabilisierungsvorrichtung umfassten Feststellmittels.

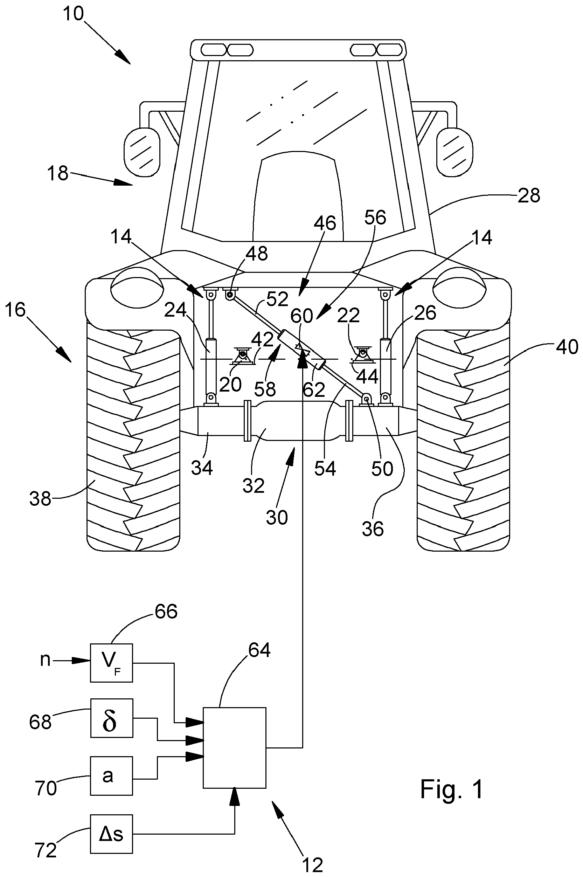

Fig. 1 zeigt ein schematisch dargestelltes Ausführungsbeispiel der erfindungsgemäßen Stabilisierungsvorrichtung für ein Kraftfahrzeug. Beispielsgemäß handelt es sich bei dem Kraftfahrzeug um ein landwirtschaftliches Nutzfahrzeug in Gestalt eines landwirtschaftlichen Traktors.

Die in dem landwirtschaftlichen Traktor 10 angeordnete Stabilisierungsvorrichtung 12 umfasst mehrere Federelemente 14 zur Schwingungslagerung eines gegenüber einer tragenden Fahrzeugstruktur 16 beweglich angeordneten Fahrzeugaufbaus 18. Die als Gummilager 20, 22 bzw. hydraulische Federzylinder 24, 26 ausgebildeten Federelemente 14 stützen den Fahrzeugaufbau 18 in einem vorderen bzw. hinteren Bereich gegenüber der tragenden Fahrzeugstruktur 16 ab. Die hydraulischen Federzylinder 24, 26 sind hierbei Bestandteil einer in dem landwirtschaftlichen Traktor 10 vorhandenen hydraulischen Einrichtung zur Lage- bzw. Niveauregulierung des als Fahrerkabine 28 ausgebildeten Fahrzeugaufbaus 18.

Bei der tragenden Fahrzeugstruktur 16 handelt es sich im vorliegenden Fall um ein rahmenloses Fahrzeugchassis 30. Das Fahrzeugchassis 30 weist ein im Heckbereich des landwirtschaftlichen Traktors 10 angeordnetes Differentialgehäuse 32 auf, das über zugehörige Endantriebseinheiten 34, 36 mit angetriebenen Hinterrädern 38, 40 in Verbindung steht. Die hydraulischen Federzylinder 24, 26 sind im Bereich der Endantriebseinheiten 34, 36 des Fahrzeugchassis 30 gelenkig befestigt. Zusätzliche Abstützstellen 42, 44 dienen der Anbringung der Gummilager 20, 22 am Fahrzeugchassis 30.

Des Weiteren umfasst die Stabilisierungsvorrichtung 12 einen Stabilisatorstab 46, der in Richtung einer zu stabilisierenden Wank- und/oder Nickbewegung der Fahrerkabine 28 verlaufend mit einem ersten Endstück 48 gelenkig an der Fahrerkabine 28 und mit einem zweiten Endstück 50 gelenkig an dem Fahrzeugchassis 30 angebracht ist. Der Stabilisatorstab 46 weist zwei in Richtung seines Verlaufs zueinander auslenkbare Stabsegmente 52, 54 auf, wobei eine zwischen den Stabsegmenten 52, 54 auftretende Auslenkung mittels eines Feststellmittels 56 blockierbar ist.

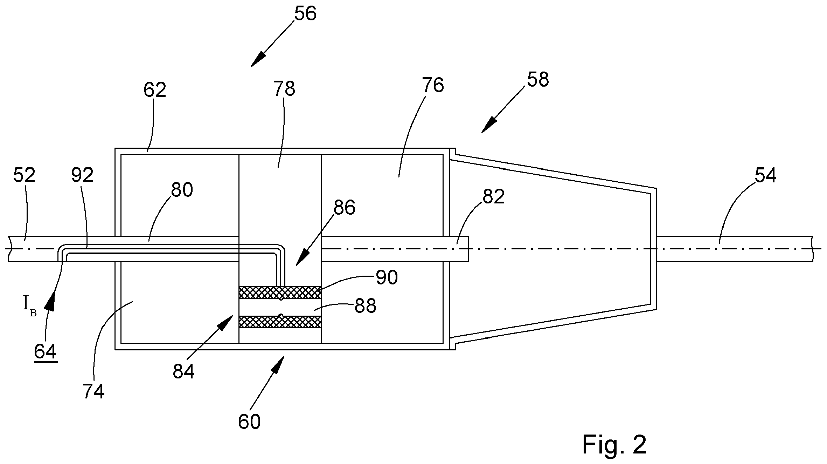

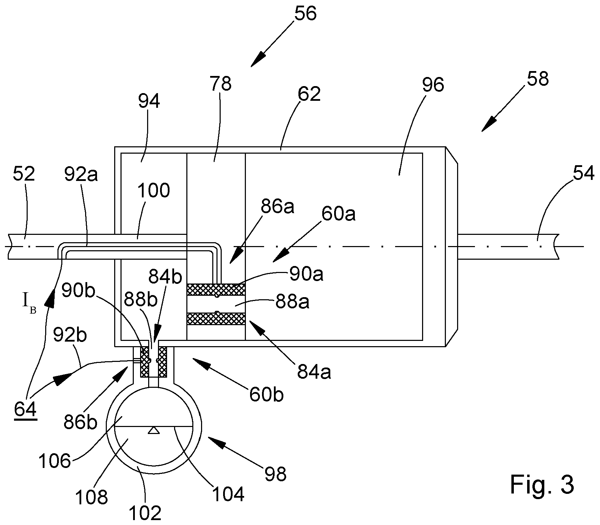

Zu diesem Zweck weist das Feststellmittel 56 einen die Stabsegmente 52, 54 verbindenden hydraulischen Ausgleichszylinder 58 auf, wobei zur Blockierung der zwischen den Stabsegmenten 52, 54 auftretenden Auslenkung ein in dem Ausgleichszylinder 58 hervorgerufener hydraulischer Ausgleichsvolumenstrom mittels eines Sperrelements 60 unterbrechbar ist. Genauer gesagt ist das erste Stabsegment 52 mit einem Zylindergehäuse 62 des Ausgleichszylinders 58 und das zweite Stabsegment 54 mit einem in dem Zylindergehäuse 62 verschiebbar angeordneten Kolben verbunden, wobei sich eine Verschiebung des Kolbens mittels des Sperrelements 60 durch Unterbrechung des Ausgleichsvolumenstroms blockieren lässt. Bezüglich des genauen Aufbaus des Ausgleichszylinders 58 sowie des Sperrelements 60 sei an dieser Stelle auf die Beschreibung der in Fig. 2 und 3 dargestellten Ausführungsformen des Feststellmittels 56 verwiesen.

Das Sperrelement 60 ist elektrisch betätigbar ausgebildet, wobei zur elektrischen Betätigung des Sperrelements 60 eine in dem landwirtschaftlichen Traktor 10 angeordnete Steuereinheit 64 dient. Ob eine Unterbrechung des Ausgleichsvolumenstroms und damit eine Blockierung des Feststellmittels 56 durch Schließen des Sperrelements 60 erforderlich ist, entscheidet die Steuereinheit 64 auf Grundlage einer oder mehrerer sensorisch erfasster Eingangsgrößen, genauer gesagt einer mittels Raddrehzahlsensoren 66 erfassten Fahrtgeschwindigkeitsgröße v_{F}, die eine aus Raddrehzahlen n abgeleitete Fahrtgeschwindigkeit des landwirtschaftlichen Traktors 10 wiedergibt, einer mittels eines Lenkwinkelsensors 68 erfassten Lenkwinkelgröße δ, die einen an lenkbaren Vorderrädern des landwirtschaftlichen Traktors 10 eingestellten Lenkwinkel wiedergibt, und/oder einer mittels eines Beschleunigungssensors 70 erfassten Beschleunigungsgröße a, die eine an der Fahrerkabine 28 angreifende Quer- und/oder Längsbeschleunigung wiedergibt.

Erkennt die Steuereinheit 64 durch Auswertung der solchermaßen sensorisch erfassten Eingangsgrößen v_{F}, δ und/oder a, dass eine für eine Straßenfahrt typische Fahrtgeschwindigkeit, ein auf eine Kurvenfahrt hinweisender Lenkwinkel und/oder eine auf eine Fahrt auf unebenem oder abschüssigem Terrain hinweisende Querund/oder Längsbeschleunigung vorliegt, mithin also zur Vermeidung möglicher Wank- und/oder Nickbewegungen eine erhöhte Seitenführung der Fahrerkabine 28 erwünscht ist, wird der Ausgleichsvolumenstrom zur Blockierung des Feststellmittels 56 durch Schließen des Sperrelements 60 unterbrochen.

Zusätzlich berücksichtigt die Steuereinheit 64 als weitere Eingangsgröße eine mittels Positionssensoren 72 erfasste Federweggröße Δs, die eine an den hydraulischen Federzylindern 24, 26 auftretende Auslenkung wiedergibt. So wird bei Erkennung von zu ausgeprägten Seitwärtsbewegungen der Fahrerkabine 28 führenden Auslenkungen zumindest zeitweise eine Unterbrechung des Ausgleichsvolumenstroms und damit eine Blockierung des Feststellmittels 56 durch Öffnen des Sperrelements 60 aufgehoben. Auf diese Weise lässt sich eine mögliche Überlastung der Gummilager 20, 22 bzw. hydraulischen Federzylinder 24, 26 aufgrund übermäßiger Scherkräfte zuverlässig verhindern.

Fig. 2 zeigt eine beispielhaft dargestellte erste Ausführungsform eines von der erfindungsgemäßen Stabilisierungsvorrichtung umfassten Feststellmittels.

Im Falle der ersten Ausführungsform des Feststellmittels 56 ist der Ausgleichszylinder 58 als Gleichlaufzylinder ausgebildet, wobei das Sperrelement 60 eine erste und zweite Zylinderkammer 74, 76 des Gleichlaufzylinders hydraulisch miteinander verbindet. Der Gleichlaufzylinder weist einen die beiden Zylinderkammern 74, 76 trennenden Kolben 78 sowie zwei auf gegenüberliegenden Seiten des Kolbens 78 angeordnete Kolbenstangen 80, 82 identischen Querschnitts auf, sodass eine Verschiebung des Kolbens 78 zu betragsmäßig übereinstimmenden Volumenänderungen in den beiden jeweils als Ringraum ausgebildeten Zylinderkammern 74, 76 führt. Im Sinne einer möglichst kompakten und zugleich robusten Bauweise ist das Sperrelement 60 baulicher Bestandteil des Kolbens 78. Soll das Feststellmittel 56 blockiert werden, so wird der bei einer Verschiebung des Kolbens 78 in dem Gleichlaufzylinder hervorgerufene Ausgleichsvolumenstrom durch Schließen des Sperrelements 60 unterbrochen.

Bei dem Sperrelement 60 handelt es sich um ein bezüglich seines Strömungswiderstands verstellbares Drosselventil 84. Der hydraulische Ausgleichsvolumenstrom weist ein Hydraulikfluid veränderlicher Rheologie auf, wobei das Drosselventil 84 zur Verstellung des Strömungswiderstands eine Einrichtung zur Rheologieänderung 86 umfasst. Bei dem Hydraulikfluid veränderlicher Rheologie handelt es sich um eine magnetorheologische Flüssigkeit. Die Zusammensetzung sowie das Verhalten derartiger Flüssigkeiten ist aus der Fachliteratur bekannt.

Demgemäß weisen magnetorheologische Flüssigkeiten magnetisch polarisierte Partikel auf, die in einer Trägerflüssigkeit, typischerweise Mineralöl oder synthetisches Öl, kolloidal suspendiert sind. Die Partikel bestehen üblicherweise aus Carbonyleisen mit einem Durchmesser von 1 bis 10 µm. Die Partikel werden in der Regel mittels einer polymeren Oberflächenbeschichtung zur Vermeidung einer unerwünschten Sedimentationsneigung stabilisiert. Wird die magnetorheologische Flüssigkeit einem Magnetfeld ausgesetzt, so verketten sich die Partikel innerhalb der Trägerflüssigkeit entlang der Feldlinien und führen zu einer von der Feldstärke abhängigen Erhöhung der Schubfließgrenze. Auf diese Weise lässt sich das Fließverhalten der magnetorheologischen Flüssigkeit innerhalb weniger Millisekunden reversibel verändern.

Die Rheologieänderung des Hydraulikfluids erfolgt im Bereich eines den Strömungswiderstand des Drosselventils 84 bestimmenden Durchtrittskanals 88. Hierzu ist mittels der Einrichtung zur Rheologieänderung 86 ein Magnetfeld im Bereich des Durchtrittskanals 88 des Drosselventils 84 erzeugbar, das im Wesentlichen senkrecht zum Verlauf des Durchtrittskanals 88 und damit zur Verkettungsrichtung der Partikel in der magnetorheologischen Flüssigkeit orientiert ist. Der Durchtrittskanal 88 weist die Gestalt einer in dem Drosselventil 84 ausgebildeten Verjüngung oder Einschnürung auf.

Bei der Einrichtung zur Rheologieänderung 86 handelt es sich um eine als baulicher Bestandteil des Drosselventils 84 ausgebildete Magnetspulenanordnung 90. Die Magnetspulenanordnung 90 umfasst eine um einen ferromagnetischen Kern gewickelte Magnetspule. Die Magnetspule und/oder deren ferromagnetischer Kern münden in unmittelbarer Nähe des Durchtrittskanals 88 in das Drosselventil 84. Zur Blockierung des Feststellmittels 56 wird die Magnetspule über mit der Steuereinheit 64 verbundene elektrische Leitungen 92 mit einem vorgebbaren Steuerstrom I_{B} beaufschlagt. Die hierdurch verursachte Rheologieänderung führt zu einer entsprechenden Erhöhung des Strömungswiderstands im Durchtrittskanal 88 des Drosselventils 84 und damit zur Unterbrechung des Ausgleichsvolumenstroms. Das Magnetfeld im Bereich des Durchtrittskanals 88 weist hierzu typischerweise eine Feldstärke in der Größenordnung von 250 bis 350 mT auf.

Mit anderen Worten ist das Drosselventil 84 durch An- und Ausschalten des Steuerstroms I_{B} zweistufig zwischen einer geöffneten und einer geschlossenen Ventilstellung umschaltbar. Abweichend davon ist es jedoch auch denkbar, den Steuerstrom I_{B} variierbar auszugestalten, sodass das Drosselventil 84 eine mehrstufige bzw. stufenlose Anpassung des Strömungswiderstands erlaubt. In letzteren Fall ist eine gezielte Beeinflussung des durch das Drosselventil 84 hindurchtretenden Ausgleichsvolumenstroms und damit eine partielle Blockierung des Feststellmittels 56 möglich. Der Gleichlaufzylinder arbeitet dann als Schwingungsabsorber mit einstellbarer Dämpfungscharakteristik.

Fig. 3 zeigt eine beispielhaft dargestellte zweite Ausführungsform eines von der erfindungsgemäßen Stabilisierungsvorrichtung umfassten Feststellmittels. Diese unterscheidet sich von der in Fig. 2 dargestellten ersten Ausführungsform bezüglich der konstruktiven Ausgestaltung des Ausgleichszylinders.

Im Falle der zweiten Ausführungsform des Feststellmittels 56 ist der Ausgleichszylinder 58 als Differentialzylinder ausgebildet, wobei ein als Drosselventil 84a ausgebildetes Sperrelement 60a eine erste und zweite Zylinderkammer 94, 96 des Differentialzylinders hydraulisch miteinander verbindet und ein als Drosselventil 84b ausgebildetes weiteres Sperrelement 60b zur Herstellung einer Volumenausgleichsverbindung zwischen der ersten Zylinderkammer 94 und einem Hydrospeicher 98 vorgesehen ist. Der Differentialzylinder weist lediglich an einer Seite des Kolbens 78 eine Kolbenstange 100 auf. Eine Verschiebung des Kolbens 78 führt daher zu betragsmäßig unterschiedlichen Volumenänderungen in den beiden als Kolben- bzw. Ringraum ausgebildeten Zylinderkammern 94, 96. Der insofern auftretende Unterschied wird über die Volumenausgleichsverbindung sowie den daran angeschlossenen Hydrospeicher 98 kompensiert. Der Hydrospeicher 98 ist von herkömmlicher Bauart und umfasst einen Druckbehälter 102, der durch ein drucknachgiebiges Trennglied 104 in einen ersten und zweiten Arbeitsraum 106, 108 unterteilt ist. Der erste Arbeitsraum 106 steht über das Drosselventil 84a mit der ersten Zylinderkammer 94 in Verbindung, wohingegen ein in dem zweiten Arbeitsraum 108 befindliches und unter Druck stehendes Gas eine auf das Trennglied 104 einwirkende Gasfeder bildet. Bei dem Gas handelt es sich um Stickstoff oder eine gasförmige Stickstoffverbindung. Alternativ kann der Hydrospeicher 98 auch als federbelasteter Speicher ausgebildet sein, bei dem anstelle eines Gases ein mechanisch vorgespanntes Federelement auf das Trennglied 104 einwirkt. Durch entsprechende Wahl der Federkonstanten des Hydrospeichers 98 ist eine gezielte Vorgabe des Ein- und Ausfederverhaltens des Differentialzylinders möglich. Soll das Feststellmittel 56 blockiert werden, so wird der bei einer Verschiebung des Kolbens 78 in dem Differentialzylinder hervorgerufene Ausgleichsvolumenstrom durch gleichzeitiges Schließen der beiden Drosselventile 84a, 84b unterbrochen.

Die beiden Drosselventile 84a, 84b sind hierbei baugleich ausgebildet und entsprechen bezüglich ihrer Funktionsweise dem in Zusammenhang mit Fig. 2 beschriebenen Drosselventil 84. So weisen die Drosselventile 84a, 84b gleichfalls Einrichtungen zur Rheologieänderung 86a, 86b in Gestalt entsprechender Magnetspulenanordnungen 90a, 90b auf. Jede der Magnetspulenanordnungen 90a, 90b umfasst eine um einen ferromagnetischen Kern gewickelte Magnetspule. Die Magnetspule und/oder deren ferromagnetischer Kern münden in unmittelbarer Nähe eines Durchtrittskanals 88a, 88b in das Drosselventil 84a, 84b. Zur Blockierung des Feststellmittels 56 wird die Magnetspule über mit der Steuereinheit 64 verbundene elektrische Leitungen 92a, 92b mit einem vorgebbaren Steuerstrom I_{B} beaufschlagt.

## Patentansprüche

1. Stabilisierungsvorrichtung für ein Kraftfahrzeug, mit mehreren Federelementen (14) zur Schwingungslagerung eines gegenüber einer tragenden Fahrzeugstruktur (16) beweglich angeordneten Fahrzeugaufbaus (18), und mit einem Stabilisatorstab (46), der in Richtung einer zu stabilisierenden Wank- und/oder Nickbewegung des Fahrzeugaufbaus (18) verlaufend mit einem ersten Endstück (48) gelenkig an dem Fahrzeugaufbau (18) und mit einem zweiten Endstück (50) gelenkig an der tragenden Fahrzeugstruktur (16) angebracht ist und der zwei in Richtung seines Verlaufs zueinander auslenkbare Stabsegmente (52, 54) aufweist, wobei eine zwischen den Stabsegmenten (52, 54) auftretende Auslenkung mittels eines Feststellmittels (56) blockierbar ist, **dadurch gekennzeichnet, dass** das Feststellmittel (56) einen die Stabsegmente (52, 54) verbindenden hydraulischen Ausgleichszylinder (58) aufweist, wobei eine Steuereinheit (64) zur Blockierung einer zwischen den Stabsegmenten (52, 54) auftretenden Auslenkung einen in dem Ausgleichszylinder (58) hervorgerufenen hydraulischen Ausgleichsvolumenstrom mittels eines Sperrelements (60, 60a, 60b) unterbricht, wenn durch Auswertung sensorisch erfasster Eingangsgrößen (v_{F}, δ, a) erkannt wird, dass eine für eine Straßenfahrt typische Fahrtgeschwindigkeit, ein auf eine Kurvenfahrt hinweisender Lenkwinkel und/oder eine auf eine Fahrt auf unebenem oder abschüssigem Terrain hinweisende Querund/oder Längsbeschleunigung vorliegt.

2. Stabilisierungsvorrichtung nach Anspruch 1, **dadurch gekennzeichnet, dass** die Steuereinheit (64) als weitere Eingangsgröße eine mittels Positionssensoren (72) erfasste Federweggröße (Δs) berücksichtigt, die eine an den hydraulischen Federzylindern (24, 26) auftretende Auslenkung wiedergibt, wobei bei Erkennung von zu ausgeprägten Seitwärtsbewegungen der Fahrerkabine (28) führenden Auslenkungen zumindest zeitweise eine Unterbrechung des Ausgleichsvolumenstroms und damit eine Blockierung des Feststellmittels (56) durch Öffnen des Sperrelements (60) aufgehoben wird.

3. Stabilisierungsvorrichtung nach Anspruch 1 oder 2, **dadurch gekennzeichnet, dass** der Ausgleichszylinder (58) als Gleichlaufzylinder ausgebildet ist, wobei das Sperrelement (60) eine erste und zweite Zylinderkammer (74, 76) des Gleichlaufzylinders hydraulisch miteinander verbindet.

4. Stabilisierungsvorrichtung nach wenigstens einem der Ansprüche 1 bis 3, **dadurch gekennzeichnet, dass** der Ausgleichszylinder (58) als Differentialzylinder ausgebildet ist, wobei das Sperrelement (60a) eine erste und zweite Zylinderkammer (94, 96) des Differentialzylinders hydraulisch miteinander verbindet und ein weiteres Sperrelement (60b) zur Herstellung einer Volumenausgleichsverbindung zwischen einer der beiden Zylinderkammern (94, 96) und einem Hydrospeicher (98) vorgesehen ist.

5. Stabilisierungsvorrichtung nach wenigstens einem der Ansprüche 1 bis 4, **dadurch gekennzeichnet, dass** es sich bei dem Sperrelement (60, 60a, 60b) um ein bezüglich seines Strömungswiderstands verstellbares Drosselventil (84, 84a, 84b) handelt.

6. Stabilisierungsvorrichtung nach wenigstens einem der Ansprüche 1 bis 5, **dadurch gekennzeichnet, dass** der hydraulische Ausgleichsvolumenstrom ein Hydraulikfluid veränderlicher Rheologie aufweist, wobei das Drosselventil (84, 84a, 84b) zur Verstellung des Strömungswiderstand eine Einrichtung zur Rheologieänderung (86, 86a, 86b) umfasst.

7. Stabilisierungsvorrichtung nach wenigstens einem der Ansprüche 1 bis 6, **dadurch gekennzeichnet, dass** es sich bei dem Hydraulikfluid veränderlicher Rheologie um eine magnetorheologische Flüssigkeit handelt.

8. Stabilisierungsvorrichtung nach wenigstens einem der Ansprüche 1 bis 7, **dadurch gekennzeichnet, dass** mittels der Einrichtung zur Rheologieänderung (86, 86a, 86b) ein Magnetfeld im Bereich eines Durchtrittskanals (88, 88a, 88b) des Drosselventils (84, 84a, 84b) erzeugbar ist.

9. Stabilisierungsvorrichtung nach wenigstens einem der Ansprüche 1 bis 8, **dadurch gekennzeichnet, dass** mittels der Einrichtung zur Rheologieänderung (86, 86a, 86b) ein Magnetfeld erzeugbar ist, das im Wesentlichen senkrecht zum Verlauf des Durchtrittskanals (88, 88a, 88b) orientiert ist.

10. Stabilisierungsvorrichtung nach wenigstens einem der Ansprüche 1 bis 9, **dadurch gekennzeichnet, dass** es sich bei der Einrichtung zur Rheologieänderung (86, 86a, 86b) um eine als baulicher Bestandteil des Drosselventils (84, 84a, 84b) ausgebildete Magnetspulenanordnung (90, 90a, 90b) handelt.

11. Stabilisierungsvorrichtung nach wenigstens einem der Ansprüche 1 bis 10, **dadurch gekennzeichnet, dass** es sich bei der tragenden Fahrzeugstruktur (16) um ein Fahrzeugchassis (30) und bei dem Fahrzeugaufbau (18) um eine Fahrerkabine (28) handelt.

12. Kraftfahrzeug, insbesondere landwirtschaftliches Nutzfahrzeug, mit einer Stabilisierungsvorrichtung (12) nach wenigstens einem der Ansprüche 1 bis 11.

## Claims

1. Stabilization device for a motor vehicle, with a plurality of spring elements (14) for the oscillating mounting of a vehicle body (18), which is arranged movably in relation to a supporting vehicle structure (16), and with a stabilizer bar (46) which, running in the direction of a rolling and/or pitching movement, to be stabilized, of the vehicle body (18), is attached in an articulated manner by a first end piece (48) to the vehicle body (18) and is attached in an articulated manner by a second end piece (50) to the supporting vehicle structure (16) and which has two bar segments (52, 54) which are deflectable with respect to each other in the direction in which said stabilizer bar runs, wherein a deflection occurring between the bar elements (52, 54) can be blocked by means of a locking means (56), **characterized in that** the locking means (56) has a hydraulic equalizing cylinder (58) connecting the bar segments (52, 54), wherein a control unit (64) for blocking a deflection occurring between the bar segments (52, 54) interrupts a hydraulic equalizing volume flow, which is brought about in the equalizing cylinder (58), by means of a blocking element (60, 60a, 60b) when it is identified, by evaluation of input variables (v_{ε}, δ, a), which are detected by a sensor, that a travel speed typical of road travel, a steering angle indicative of cornering and/or a transverse acceleration and/or longitudinal acceleration indicative of travel on uneven or sloping terrain is present.

2. Stabilization device according to Claim 1, **characterized in that**, as a further input variable, the control unit (64) takes into consideration a spring travel variable (Δs) which is detected by means of position sensors (72) and reproduces a deflection occurring at the hydraulic spring cylinders (24, 26), wherein, when deflections leading to excessive sideway movements of the driver's cab (28) are identified, the equalizing volume flow is at least temporarily interrupted and therefore blocking of the locking means (56) is cancelled by opening the blocking element (60).

3. Stabilization device according to Claim 1 or 2, **characterized in that** the equalizing cylinder (58) is designed as a synchronous cylinder, wherein the blocking element (60) hydraulically connects a first and second cylinder chamber (74, 76) of the synchronous cylinder to each other.

4. Stabilization device according to at least one of Claims 1 to 3, **characterized in that** the equalizing cylinder (58) is designed as a differential cylinder, wherein the blocking element (60a) hydraulically connects a first and second cylinder chamber (94, 96) of the differential cylinder to each other, and a further blocking element (60b) is provided for producing a volume equalizing connection between one of the two cylinder chambers (94, 96) and a hydraulic accumulator (98).

5. Stabilization device according to at least one of Claims 1 to 4, **characterized in that** the blocking element (60, 60a, 60b) is a throttle valve (84, 84a, 84b) which is adjustable in respect of its flow resistance.

6. Stabilization device according to at least one of Claims 1 to 5, **characterized in that** the hydraulic equalizing volume flow has a hydraulic fluid of variable rheology, wherein, for adjusting the flow resistance, the throttle valve (84, 84a, 84b) comprises a device for changing the rheology (86, 86a, 86b) .

7. Stabilization device according to at least one of Claims 1 to 6, **characterized in that** the hydraulic fluid of variable rheology is a magneto-rheological liquid.

8. Stabilization device according to at least one of Claims 1 to 7, **characterized in that** a magnetic field can be generated in the region of a through channel (88, 88a, 88b) of the throttle valve (84, 84a, 84b) by means of the device for changing the rheology (86, 86a, 86b).

9. Stabilization device according to at least one of Claims 1 to 8, **characterized in that** a magnetic field which is oriented substantially perpendicularly to the course of the through channel (88, 88a, 88b) can be generated by means of the device for changing the rheology (86, 8ba, 86b).

10. Stabilization device according to at least one of Claims 1 to 9, **characterized in that** the device for changing the rheology (86, 86a, 86b) is a magnetic coil arrangement (90, 90a, 90b) designed as a structural part of the throttle valve (84, 84a, 84b) .

11. Stabilization device according to at least one of Claims 1 to 10, **characterized in that** the supporting vehicle structure (16) is a vehicle chassis (30) and the vehicle body (18) is a driver's cab (28).

12. Motor vehicle, in particular agricultural commercial vehicle, with a stabilization device (12) according to at least one of Claims 1 to 11.

## Revendications

1. Ensemble de stabilisation pour un véhicule automobile, présentant
plusieurs éléments élastiques (14) qui montent de manière oscillante la carrosserie (18) du véhicule disposé de manière à pouvoir se déplacer par rapport à une structure portante (16) du véhicule et
une barre de stabilisation (46) placée dans la direction d'un déplacement de roulis et/ou d'un déplacement de tangage de la carrosserie (18) du véhicule, s'étendant entre une première pièce d'extrémité (48) articulée sur la carrosserie (18) du véhicule et une deuxième pièce d'extrémité (50) articulée sur le châssis porteur (16) du véhicule et présentant deux segments (52, 54) de barre pouvant s'allonger l'un par rapport à l'autre dans la direction de leur extension,
une extension survenant entre les segments (52, 54) de barre pouvant être bloquée au moyen d'un moyen d'immobilisation (56),
**caractérisé en ce que**
le moyen d'immobilisation (56) présente un vérin hydraulique de compensation (58) qui relie les segments (52, 54) de barre,
**en ce que** pour bloquer une extension survenant entre les segments (52, 54) de barre, une unité de commande (64) interrompt au moyen d'un élément de blocage (60, 60a, 60b) un écoulement volumique de fluide hydraulique de compensation provoqué dans le vérin de compensation (58) si, par évaluation de grandeurs d'entrée (Vε, δ, a), saisies par des capteurs, il est détecté que pour la vitesse typique de conduite sur la chaussée, un angle de braquage indiquant un déplacement en virage et/ou une accélération transversale et/ou une accélération longitudinale indiquent un déplacement sur un terrain irrégulier ou en pente.

2. Ensemble de stabilisation selon la revendication 1, **caractérisé en ce que** l'unité de commande (64) tient compte comme autre grandeur d'entrée d'une longueur (Δs) de parcours élastique saisie au moyen de capteurs de position (72) et représentant une extension survenant sur les vérins hydrauliques (24, 26) et **en ce que** lorsque des extensions conduisent à des déplacements latéraux accusés de la cabine (28) du conducteur, l'interruption de l'écoulement volumique de compensation et donc le blocage du moyen d'immobilisation (56) est supprimé au moyen une partie du temps par ouverture de l'élément de blocage (60) .

3. Ensemble de stabilisation selon les revendications 1 ou 2, **caractérisé en ce que** le vérin de compensation (58) est configuré comme vérin à double effet, l'élément de blocage (60) reliant hydrauliquement l'une à l'autre une première et une deuxième chambre (74, 76) du vérin à double effet.

4. Ensemble de stabilisation selon au moins l'une des revendications 1 à 3, **caractérisé en ce que** le vérin de compensation (58) est configuré comme vérin différentiel, l'élément de blocage (60a) reliant hydrauliquement l'une à l'autre une première et une deuxième chambre (94, 96) du vérin différentiel et un autre élément de blocage (60b) étant prévu pour établir une liaison de compensation de volume entre l'une des deux chambres (94, 96) du vérin et un réservoir hydraulique (98).

5. Ensemble de stabilisation selon au moins l'une des revendications 1 à 4, **caractérisé en ce que** l'élément de blocage (60, 60a, 60b) est une soupape d'étranglement (84, 84a, 84b) dont la résistance à l'écoulement peut être ajustée.

6. Ensemble de stabilisation selon au moins l'une des revendications 1 à 5, **caractérisé en ce que** l'écoulement volumique du fluide hydraulique de compensation présente un fluide hydraulique à rhéologie modifiable, la soupape d'étranglement (84, 84a, 84b) comprenant un dispositif (86, 86a, 86b) de modification de la rhéologie qui ajuste la résistance à l'écoulement.

7. Ensemble de stabilisation selon au moins l'une des revendications 1 à 6, **caractérisé en ce que** le fluide hydraulique de rhéologie modifiable est un liquide magnétorhéologique.

8. Ensemble de stabilisation selon au moins l'une des revendications 1 à 7, **caractérisé en ce qu'**un champ magnétique peut être produit au niveau d'un canal de passage (88, 88a, 88b) de la soupape d'étranglement (84, 84a, 84b) au moyen du dispositif (86, 86a, 86b) de modification de la rhéologie.

9. Ensemble de stabilisation selon au moins l'une des revendications 1 à 8, **caractérisé en ce que** le dispositif (86, 86a, 86b) de modification de la rhéologie permet de produire un champ magnétique qui est orienté essentiellement à la perpendiculaire de la direction du canal de passage (88, 88a, 88b).

10. Ensemble de stabilisation selon au moins l'une des revendications 1 à 9, **caractérisé en ce que** le dispositif (86, 86a, 86b) de modification de la rhéologie est un ensemble (90, 90a, 90b) de bobine magnétique configuré comme composant de la soupape d'étranglement (84, 84a, 84b) .

11. Ensemble de stabilisation selon au moins l'une des revendications 1 à 10, **caractérisé en ce que** le châssis porteur (16) du véhicule est le châssis (30) du véhicule et la carrosserie (18) du véhicule une cabine (28) pour conducteur.

12. Véhicule automobile, en particulier engin agricole, doté d'un ensemble de stabilisation (12) selon au moins l'une des revendications 1 à 11.
